# EUROPEAN PATENT APPLICATION

(11) **EP 2 253 517 A2**
(43) Date of publication of application: **24.11.2010**
(21) Application number: 10175815.9
(22) Date of filing: 08.01.2009
(51) Int. Cl.: B60R 21/215

(54) **Airbag module**

(30) Priority: 09.01.2008 IT BO20080013
(62) Divisional of application: 09700737.1
(71) Applicant: FERRARI S.p.A., Modena (IT)
(72) Inventor: Bruzzone, Michela, 41043, Formigine (IT)
(74) Representative: Jorio, Paolo

(57) **Abstract**

An airbag module (2) having: a first flap (6) hinged to rotate about a first axis (7) of rotation; a second flap (8) hinged to rotate about a second axis (9) of rotation, and having a central edge (13a) located under a central edge (12a) of the first flap (6) so that the first flap (6) rests centrally on the second flap (8); and a third flap (10) hinged to rotate about a third axis (11) of rotation and having a central edge (14a) located under the central edge (12a) of the first flap (6) and the central edge (13a) of the second flap (8), so the first flap (6) rests centrally on the second flap (8) and third flap (10), and the second flap (8) rests centrally on the third flap (10).

## Description

### TECHNICAL FIELD

The present invention relates to an airbag module.

The present invention may be applied to advantage to a front passenger airbag, to which the following description refers purely by way of example.

### BACKGROUND ART

Modern cars are being equipped with an ever-increasing number of active and passive safety devices. The passenger compartment, in particular, is being installed with an increasing number of airbags to provide the best possible crash protection of all the occupants.

Almost all cars are now manufactured with a front passenger airbag, which is stowed in a housing formed in the dashboard and closed at the front by a cover hinged to the dashboard. Currently manufactured cars have two types of airbag covers : exposed, i.e. visible in the trim; or concealed, i.e. integrated invisibly in the trim. In cars with the cover integrated in the framework, the trim material may be fabric, leather, or plastic. To allow the airbag cover to open in the event of a crash, the trim material around the cover is weakened by an incision on the inside (i.e. invisibly) to form a shear line running along the opening sides of the cover.

In the event of a crash, the front passenger airbag expands and blows open the cover, shearing the trim material along the inner shear line. In the event of a head-on crash, and particularly when not wearing a seat belt, the passenger may be thrown against the dashboard and injured by the cover as it is blown open by the expanding airbag. To protect the passenger from injury caused by opening of the front airbag cover, it has been proposed to make the cover in two hinged flaps.

A cover divided into two flaps, however, is relatively weak in the middle, at the dividing line between the two flaps, and is therefore difficult to make so that it is strong enough in the middle not to give way or at least yield partly when pressed from the outside. In this connection, it is important to bear in mind that normal use of the dashboard requires that the front passenger airbag cover be capable of withstanding fairly high external pressure (of around 1000 N).

In addition, more and more use is being made of airbags with two separate, asymmetrical inflation charges, i.e. with different inflation capacities (e.g. a 30/70% or 40/60% inflation capacity distribution). These provide for adjusting inflation of the airbag to the intensity of a head-on crash, but, when used together, the two charges may result in uneven inflation of the airbag. In other words, the higher-inflation-charge part of the airbag is inflated more than the lower-inflation-charge part.

US5451075A1 discloses a closure for an airbag assembly including a flexible outer skin and a layer of foam material covering a retainer member having an air bag deployment opening therein closed by a moveable door that is overlapped with the retainer member to support the door against movement inwardly of the retainer member while providing free hinging movement thereof with respect to the retainer member for stressing and separating the layer of foam and the outer skin for forming a deployment path therethrough for the air bag.

### DISCLOSURE OF THE INVENTION

It is an object of the present invention to provide an airbag module designed to eliminate the above drawbacks, and which at the same time is cheap and easy to produce.

According to the present invention, there is provided an airbag module as claimed in the accompanying Claims.

### BRIEF DESCRIPTION OF THE DRAWINGS

A number of non-limiting embodiments of the present invention will be described by way of example with reference to the accompanying drawings, in which:
Figure 1 shows a schematic view in perspective of a car dashboard fitted with a front passenger airbag;
Figure 2 shows a schematic view in perspective of a Figure 1 airbag housing with a cover in accordance with the present invention;
Figure 3 shows a schematic plan view of the Figure 2 cover;
Figure 4 shows a section along line IV-IV of a detail of the Figure 3 cover;
Figure 5 shows a section along line V-V of a detail of the Figure 3 cover;
Figure 6 shows a section along line VI-VI of a detail of the Figure 3 cover;
Figure 7 shows a further schematic plan view of the Figure 2 cover.

### PREFERRED EMBODIMENTS OF THE INVENTION

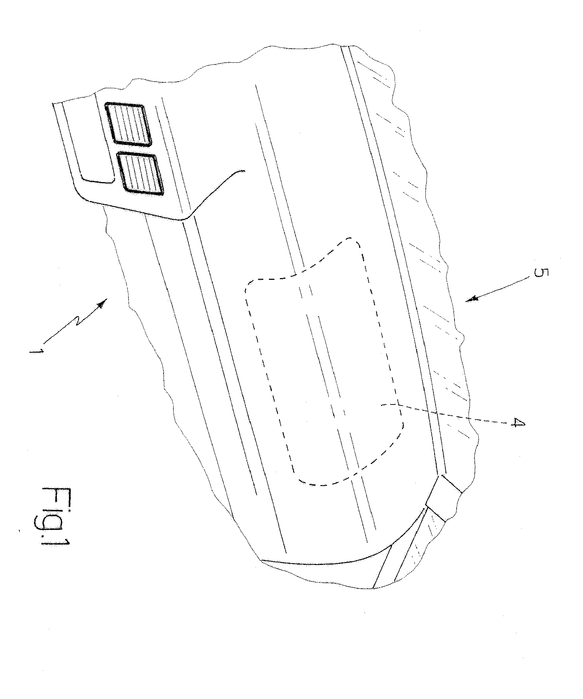

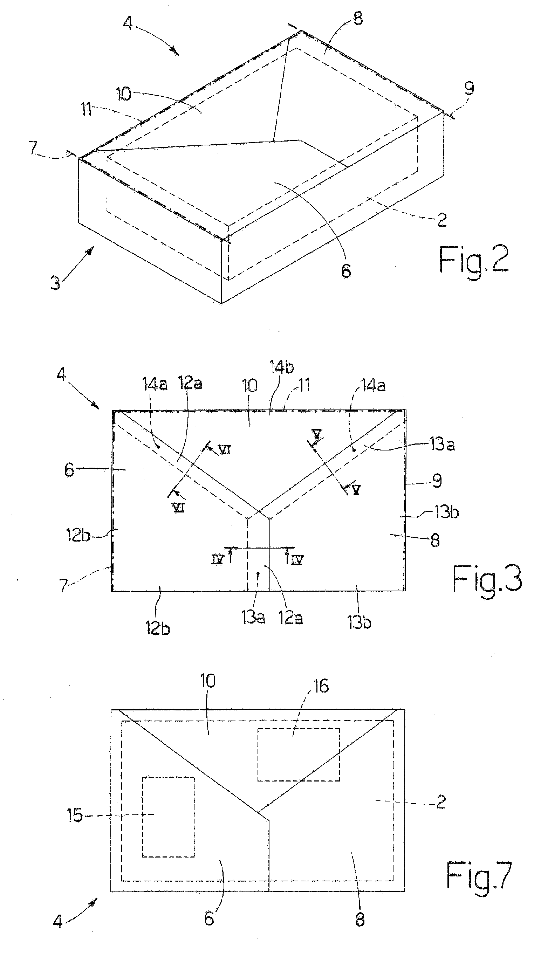

Number 1 in Figure 1 indicates as a whole the passenger side of a car dashboard. Dashboard 1 is fitted with an airbag 2 (Figure 2) stowed inside a housing 3 (Figure 2) closed at the top by a cover 4 designed to open in the event of and by inflation of airbag 2. Cover 4 is integrated in a rigid trim 5, which forms part of dashboard 1 and has shear lines along the opening sides of cover 4 of airbag 2. In actual use, the pressure exerted by the expanding airbag 2 on cover 4 shears trim 5 along the shear lines, and opens cover 4 to allow airbag 2 to inflate outside housing 3.

As shown in Figures 2 and 3, cover 4 comprises a top flap 6 hinged to housing 3 to rotate about an axis of rotation 7; an intermediate flap 8 hinged to housing 3 to rotate about an axis of rotation 9; and a bottom flap 10 hinged to housing 3 to rotate about an axis of rotation 11.

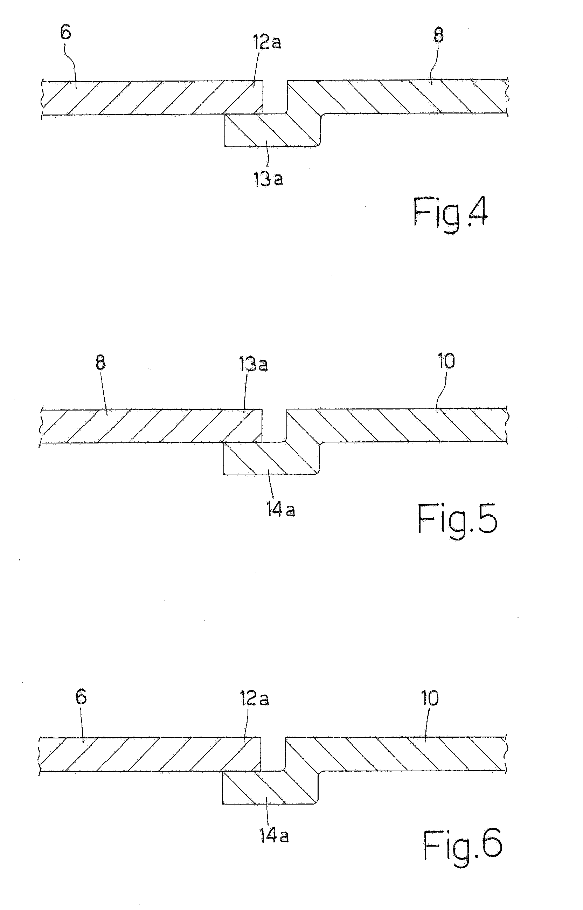

As shown in Figures 4, 5 and 6, top flap 6 has a central edge 12a located over a central edge 13a of intermediate flap 8, and over a central edge 14a of bottom flap 10, so top flap 6 rests centrally on intermediate flap 8 and bottom flap 10. And central edge 13a of intermediate flap 8 is located over central edge 14a of bottom flap 10, so intermediate flap 8 rests centrally on bottom flap 10.

In addition to central edge 12a, top flap 6 has a lateral edge 12b which rests on the framework of trim 5. Similarly, in addition to central edge 13a, intermediate flap 8 has a lateral edge 13b which rests on the framework of trim 5; and, in addition to central edge 14a, bottom flap 10 has a lateral edge 14b which rests on the framework of trim 5.

Because top flap 6 rests centrally on intermediate flap 8 and bottom flap 10, and intermediate flap 8 rests centrally on bottom flap 10, flaps 6, 8 and 10 must open in a precise compulsory sequence : top flap 6 must open first, followed by intermediate flap 8 and finally bottom flap 10. In other words, resting on intermediate flap 8, top flap 6 must open to allow intermediate flap 8 to open; and, resting centrally on bottom flap 10, intermediate flap 8 must open to allow bottom flap 10 to open.

The three flaps 6, 8, 10 resting centrally one on top of another, top flap 6 (resting on both flaps 8 and 10) must open first; intermediate flap 8 (resting on bottom flap 10 and supporting top flap 6) must open second; and bottom flap 10 (supporting both flaps 6 and 8) must open last.

In the preferred embodiment shown in the attached drawings, top flap 6 is in the shape of a right-angle trapezium with its major base hinged along axis of rotation 7; intermediate flap 8 is in the shape of a right-angle trapezium with its major base hinged along axis of rotation 9 (more specifically, intermediate flap 8 is specularly symmetrical with top flap 6); and bottom flap 10 is in the shape of an isosceles triangle with its base hinged along axis of rotation 11.

Because flaps 6, 8, 10 of cover 4 rest centrally on one another and at the same time rest laterally on the framework of trim 5, cover 4 is extremely strong centrally and capable of withstanding severe pressure (even over 1000 N) with no appreciable yield.

In a preferred embodiment shown in Figure 7, airbag 2 has two separate, asymmetrical inflation charges 15 and 16, i.e. with different inflation capacities to adapt inflation of the airbag to the intensity of a head-on crash. More specifically, top flap 6 is located over inflation charge 15 of airbag 2, which has a lower inflation capacity (i.e. power) than inflation charge 16 of airbag 2; and bottom flap 10 is located over inflation charge 16 of airbag 2, which has a higher inflation capacity (i.e. power) than inflation charge 15 of airbag 2.

Given the above arrangement of inflation charges 15 and 16 of airbag 2, when both inflation charges 15 and 16 are activated, the gas produced by inflation charge 16 at the initial inflation stage cannot expand upwards, on account of bottom flap 10 over inflation charge 16 only being able to open after top flap 6 and intermediate flap 8. As a result, at the initial inflation stage and until bottom flap 10 starts to open, the gas produced by inflation charge 16 flows towards top flap 6, thus balancing the inflation capacities of inflation charges 15 and 16, and so inflating airbag 2 symmetrically.

In a different embodiment not shown, cover 4 of airbag 2 comprises only top flap 6 and intermediate flap 8, both of which are triangular; and inflation charge 16 is located under intermediate flap 8.

Cover 4 as described has numerous advantages : it is cheap and easy to produce; compared with traditional covers, it reduces potential interference of flaps 6, 8, 10 with the windscreen as the flaps open; it safeguards against the passenger's head coming into contact with flaps 6, 8, 10 as they open; and it has a much more rigid central area.

Moreover, cover 4 as described provides for symmetrically inflating airbag 2, even when using asymmetrical inflation charges, by simply locating the lower-power inflation charge 15 under top flap 6 which must open first, so that part of the inflation pressure produced by the higher-power inflation charge 16 is transferred to top flap 6, thus balancing the inflation pressure and so inflating airbag 2 symmetrically.

## Claims

1. An airbag module (2) comprising a cover (4) which comprises:
a first flap (6) hinged to rotate about a first axis (7) of rotation; and
a second flap (8) hinged to rotate about a second axis (9) of rotation, and having a central edge (13a) located under a central edge (12a) of the first flap (6) so that the first flap (6) rests centrally on the second flap (8);
the airbag module (2) being **characterized in that** the cover (4) comprises a third flap (10) hinged to rotate about a third axis (11) of rotation and having a central edge (14a) located under the central edge (12a) of the first flap (6) and the central edge (13a) of the second flap (8), so the first flap (6) rests centrally on the second flap (8) and third flap (10), and the second flap (8) rests centrally on the third flap (10).

2. An airbag module (2) as claimed in Claim 1, wherein the first flap (6) has a lateral edge (12b) resting on the framework of a trim (5), and the second flap (8) has a lateral edge (13b) resting on the framework of the trim (5).

3. An airbag module (2) as claimed in Claim 1 or 2, wherein the first flap (6) is in the shape of a right-angle trapezium with its major base hinged along the first axis (7) of rotation; the second flap (8) is in the shape of a right-angle trapezium with its major base hinged along the second axis (9) of rotation; and the third flap (10) is in the shape of an isosceles triangle with its base hinged along the third axis (11) of rotation.
